# EUROPEAN PATENT APPLICATION

(11) **EP 3 188 111 A1**
(43) Date of publication of application: **05.07.2017**
(21) Application number: 16207192.2
(22) Date of filing: 28.12.2016
(51) Int. Cl.: G06Q 30/06

(54) **A METHOD FOR EXTRACTING LATENT CONTEXT PATTERNS FROM SENSORS**

(30) Priority: 28.12.2015 IL 24338615
(71) Applicant: Deutsche Telekom AG, 53113 Bonn (DE)
(72) Inventor: Shapira, Bracha, 8472811 Beer-Sheva (IL); Rokach, Lior, 8496500 Omer (IL); Bar, Ariel, 7740914 Ashdod (IL); Unger, Moshe, 5228559 Omer (IL); Chizi, Barak, 7828101 Ashkelon (IL)
(74) Representative: Graf von Stosch, Andreas

(57) **Abstract**

A method for extracting latent context from raw data sensor, according to which features are extracted from raw data sensor records by data manipulations, mathematical calculations and extracting statistical features related to sensor data. Latent context patterns are discovered by building a latent context condition applying clustering algorithm and building a latent context attributes applying Deep Learning algorithm and PCA algorithm. Then the discovered patterns are matched into a unified vector which presents the latent context patterns extracted from the raw data sensor.

## Description

### Field of the Invention

The invention is in the field of recommendation systems. More specifically, the invention relates to a method for extracting latent context patterns from sensors.

### Background of the Invention

The use of different portals for consuming content in a variety of fields is a standard in the modern life. Almost everybody have an account through which he acquire content such as music, movies, books etc. in most portals there is usually a recommendation system which can recommend to the user on similar things according to the features of the items that are chosen. However, most of the recommendation systems today are naive recommendation system which can recommend to a person only if there is enough information about the user taste and only according to mutual users or items. For example, if a user choses to hear rock music, the recommendation system recommends on other songs which are also rock music and usually with some similar features according to the content of the music.

Traditional context aware recommendation systems require explicit contexts. Obtaining these contexts is a difficult task since it requires the user to share his context consistently - a task that users will prefer to avoid due to time consuming effort and privacy issues.

It is therefore an object of the present invention to use raw and unlabeled sensors data to derive latent context patterns, to be used by context aware recommendation systems.

### Summary of the invention

The present invention relates to a method for extracting latent context from raw data sensor, comprising the steps of:
extracting feature from raw data sensor records by data manipulations, mathematical calculations and extracting statistical features related to sensor data;
discovering latent context patterns by building a latent context condition applying clustering algorithm; and building a latent context attributes applying Deep Learning algorithm and PCA algorithm; and matching said discovered patterns into a unified vector which presents the latent context patterns extracted from said raw data sensor.

In an embodiment of the invention, extracting feature from raw data sensor records is done by:
data aggregation of pervious collected sensor records; normalization;
calculating statistic measures of average, mean, variance, standard deviation, minimum, maximum, range, correlation, percentile analysis, energy, entropy;
time series analysis for identifying trends; Fourier Transformations on time series;
distribution analysis for nominal and numeric values; rule based extracted features on raw data sensors; and
applying external services which may enhance the current data.

In an embodiment of the invention, latent context patterns can be global or personal.

In an embodiment of the invention, constructing latent context condition using clustering algorithm comprises the steps of:
defining an initial set of k centroids randomly, one for each cluster;
associating each point belonging to a given data set to the nearest centroid using a distance measure;
re-calculate k new centroids;
repeating steps b and c until reaching a predetermined number of repeats or until there are no more changes in the assignment of points to clusters.

In an embodiment of the invention, constructing latent context attributes using Deep Learning algorithm comprises the steps of:
Receiving as an input a training set *S* = {*s*₁, *s*₂, *...*, *sₙ*}, where each sample is *r*-dimensional, containing the features extracted from the raw data; *l* - the number of latent context variables to be learned; *f* - the activation function for the neural network;
normalizing S dataset by converting nominal values to a set of binary indicators, and normalizing all numeric variables to the range {0..1} the normalization includes resulting in a normalized dataset *S'* where each sample is *r'*-dimensional and each value is a numeric variable within the range {0..1};
training an Autoencoder over the normalized training set;
setting the neural network to include *l* hidden units and to activate function *f* ;
retrieve the matrix *Wₗₓᵣ*, where *wᵢⱼ* is the weight of the edge that connects the *j^{th}* input node to the *i^{th}* hidden unit;
initializing a dataset *O*;
iterating on each sample in *S*' multiplying said sample by the transpose of *W,* and applying the activation function on each element of the resulted vector;
adding said resulted vector to *O* and returning *O* as a resulted dataset containing the extracted *l*-dimensional latent context attributes of *S*.

In an embodiment of the invention, constructing latent context attributes using PCA algorithm, comprising the steps of:
Receiving as an input:
   a training set *S =* {*s*₁, *s*₂, *...*, *sₙ*} where each sample is *r*-dimensional, containing the features extracted from the raw data; *l* - the number of latent context variables to be learned; *f* - the activation function for the neural network; and
   µ that specifies the threshold as the percentage of how much variance of the original data, the principal components must cover;
   normalizing *S* dataset by converting nominal values to a set of binary indicators, and normalizing all numeric variables to the range {0..1} the normalization includes resulting in a normalized dataset *S'* where each sample is *r'*-dimensional and each value is a numeric variable within the range {0..1};
   training a PCA model on *S'* using the covariance method;
   retrieving the top-k PCA components with the highest matching eigenvalues and adding Principle components to the top-k pool until the ratio between the eigenvalues sum of selected principle components in the pool and the total eigenvalues is lower than µ, resulting a matrix *W_{r'xk}*, where each column is one of the selected eigenvectors;
   multiplying the original datasets *S* by matrix ***W*** thereby generating the latent context variables and normalizing all numeric variables to the range {0..1};
   returning as a result 0 dataset which contain the latent context attributes for *S* and a function to extract latent context for new observed data sample *t*.

### Brief description of the drawings

- Fig. 1 schematically shows a flowchart describing the system and method of the present invention;
- Fig. 2 schematically shows a pseudo code for Latent Contexts Extractor using an Autoencoder;
- Fig. 3 schematically shows a pseudo code for Latent Contexts Extractor using PCA;
- Fig. 4 schematically shows a table of latent context illustration;
- Fig. 5 schematically shows a table of Context Inference Results;
- Fig. 6 schematically shows a graph describing Clustering Correlation; and
- Fig. 7 schematically shows a table of Latent Context Recommendation System Evaluation.

### Detailed Description of the Invention

The present invention describes how to extract raw sensor data in order to generate latent context patterns and enhance different external services that may utilize them to improve their performances. One of these services can be context aware recommendation systems. Another example of a service that can utilize these patterns are context inference models.

The method of the present invention includes the following steps: First, raw data repository is manipulated and transformed into a set of features. Second, two types of latent context patterns are derived from these features: latent context conditions and latent context attributes. Both of these patterns types can be global (derived from the whole dataset) or personal (derived from records which share the same entity ID). Third, a matching process is performed to join the patterns together. The end-result is a new dataset which maps every record from the original dataset into a set of latent context patterns discovered by the proposed system. These records and patterns can be later utilized to enhance and improve external services such as context aware recommendation services and explicit context inference models.

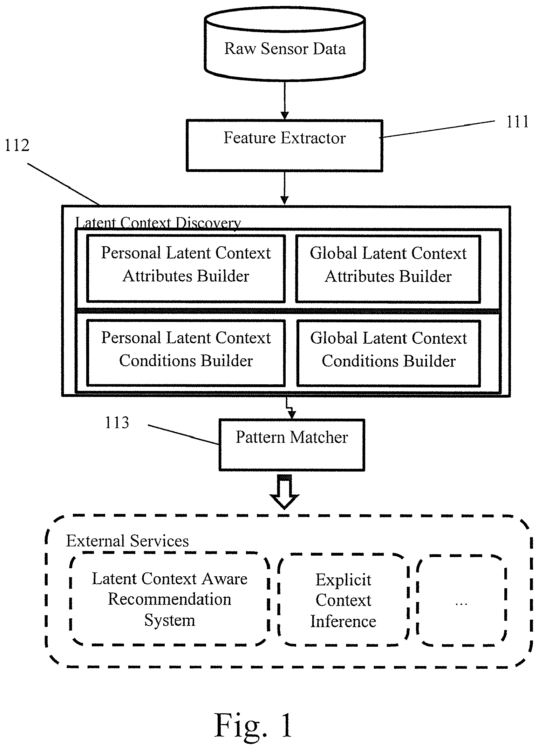

Fig. 1 schematically describes the component of the system of the present invention. As can be seen a feature extractor 111, extracts from the raw sensor data various types of features which are transferred to the latent context discovery unit 112. In the latent context discovery unit 112 two types of latent context are derived: personal and global. The patterns are then matched by the pattern matcher 113. The patterns can eventually be used to several proposes, for example; recommendation system, explicit context inference etc.

The Sensors Feature Extractor component 111 is responsible to extract various types of features from the raw sensors data. The feature extraction is a general process which relates to extracting statistical features related to sensor data and may include (but not limited) the following data manipulations:
- Data aggregation of pervious collected sensor records.
- Normalization.
- Calculating different types of statistic measures: average, mean, variance, standard deviation, minimum, maximum, range, correlation, percentile analysis, energy, entropy etc.
- Time series analysis for identifying trends.
- Fourier Transformations on time series.
- Distribution analysis for nominal and numeric values.
- Rule based extracted features on raw data sensors.
- Applying external services which may enhance the current data (e.g.: a weather forecast service which receives GPS coordinates and returns the current weather in the area).

The Latent Context Discovery unit 112 is the core component in the present invention, which is responsible to identify contextual patterns among the prediction of the extracted features. In general, patterns can be global or personal - global patterns are derived from the full dataset, while personal are inferred based subsets of records which belong to a certain entity (e.g.: all records which belong to a certain user). Latent contexts are also classified into two families:
- Latent Context Conditions: These context patterns map vectors of sensors data to a set of latent conditional contexts. Latent context conditions are a series of categorical and latent factors, where each factor indicates that the entity behind this record is at a certain explicit condition/status (e.g. walking, in home, etc.). In particular different clustering methods (e.g.: k-means) can be applied in order to derive latent context conditions. In this approach the associated cluster-id of the current record represents the latent context condition.

- Latent Context Attributes: These context patterns map vectors of sensors' to a set of latent context attributes. Latent context attributes are numeric vectors of values which describe the relationships and patterns among the different original features. In particular Deep Leaning and PCA are applied to learn these models. Those two algorithms are different approaches- PCA uses linear transformation of sensor features and Deep Learning is an innovative approach which uses neural networks, which is not only linear. The present invention applies both algorithms and report their effectiveness.

For each domain or dataset it is possible to produce one or more of the latent context patterns combinations among the two described axis: "global" vs. "personal" and "context conditions" vs. "context attributes". Each one of algorithms mentioned above (Deep Learning, PCA and clustering algorithms) is a good candidate for generating latent contexts. The next sections provide more details about the different learning algorithms for discovering these patterns.

### Latent Context Conditions Discovery Using Clustering Algorithms

The K-Means procedure follows a straightforward way to match a given data set through a certain number (k) of clusters fixed a priori. The main idea is to define an initial set of k centroids randomly, one for each cluster. The next step is to take each point belonging to a given data set and associate it to the nearest centroid using a distance measure (e.g.: Euclidian distance). After assigning all the data points, it is needed to re-calculate k new centroids resulting from the new assignment of the previous step. The two steps (cluster assignment/centroid calculation) are repeated until reaching a termination condition which can be a fixed number of repeats or until there are no more changes in points' assignment's to clusters. Expectation Maximization (EM) (EM stands for what?) clustering extends the K-means approach with EM phases which estimate Gaussian distribution parameters for each of the features in the dataset. The end result of these two algorithms is a cluster association for each of the available records. These cluster-id associations are used as indicators of tags for latent context conditions.

### Latent Context Attributes Discovery Using Deep Learning

An Autoencoder neural network is an unsupervised learning algorithm that applies backpropagation, setting the target values to be equal to the inputs. For example, if we have only unlabeled training examples set{*x*⁽¹⁾, *x*⁽²⁾, *x*⁽³⁾, *...*}*, where x*^{(*i*)}*∈ Rⁿ,* an autoencoder would aim at setting *y*^{(*i*)} = *x*^{(*i*)}. In the training phase the Auto encoder tries to learn a function *h_{w,b}*(*x*) *≈ x*, where W and b are the weights on the network's edges. Training an Autoencoder requires specifying the number of hidden units and the activation function applied for each inner node in the neural network. The sigmoid is a common function for this task.

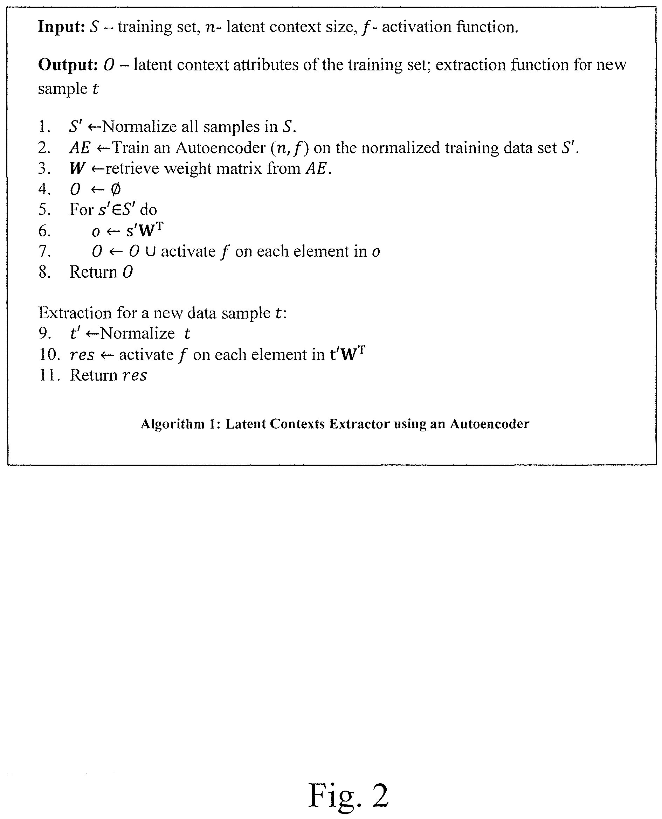

Fig. 2 schematically shows the algorithm which describes how the learned weights of the Autoencoder network can be utilized to extract latent context attributes. The input for the algorithm is a training set *S* = {*s*₁, *s*₂, ..., *sₙ*}, where each sample is *r*-dimensional, containing the features extracted from the raw data; *l* - the number of latent context variables to be learned; *f* - the activation function for the neural network (the default is the sigmoid function). The output is a dataset *O* containing the extracted *l*-dimensional latent context attributes of *S*. The algorithm starts with normalizing *S* dataset (line 1); the normalization includes conversion of nominal values to a set of binary indicators, and normalization of all numeric variables to the range {0..1}. The result is a modified dataset *S*' where each sample is *r'*-dimensional and each value is a numeric variable within the range {0..1}. Next, an Autoencoder is trained over the normalized training set (line 2). The neural network is set to include *l* hidden units and to activate function *f*. After the Autoencoder is trained, we retrieve the matrix *W_{lxr'},* where *wᵢⱼ* is the weight of the edge that connects the *j^{th}* input node to the *i^{th}* hidden unit (line 3). After initializing *0* in line 4, lines 6-7 iterate on each sample in *S'*, multiply it by the transpose of *W,* and apply the activation function on each element of the resulted vector, before adding it to *0* and returning it. Lines 9-11 describe how to extract the latent context for a new sample *t* (the sample must have the same structure of each sample in *S*): we normalize the new record (similar to line 1), and use *W* and the activation function *f* with the same procedure described in lines 6-7.

### Latent Context Attributes Discovery Using PCA

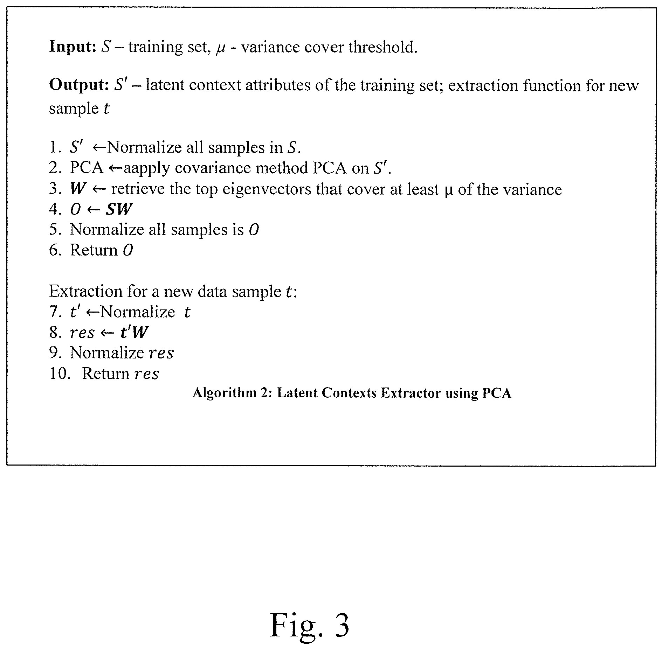

Principal Component Analysis (PCA) is a dimensionally reduction method that uses an orthogonal transformation to convert a set of observations with possible correlated variables into a set of new uncorrelated features. Each of the new features is a linear combination of the original ones. These features are referred to as principal components, and are generated with the goal of maximizing the variance of the new transformed data. PCA can be applied by computing the covariance matrix of the original features (after a normalization process), calculating the eigenvectors and eigenvalues of the covariance matrix, ordering the eigenvectors according to their matching eigenvalues, and selecting the top-k eigenvectors according to this list. Fig. 3 schematically shows the algorithm which describes the process of utilizing the PCA output to construct latent context attributes. The input to the algorithm are the training set S holding the same structure as described in the algorithm of Fig. 2; and µ that specifies the threshold as the percentage of how much variance of the original data, the principal components must cover. The output of the algorithm is *O* which contain the latent context attributes for *S* and a function to extract latent context for new observed data sample t. In line 1 *S* is normalized with the same procedure of the algorithm of Fig. 2. In line 2 a PCA model is trained on *S'* using the covariance method. Next (line 3), the top-k PCA components are retrieved with the highest matching eigenvalues. Principle components are added to the top-k pool until the ratio between the eigenvalues sum of selected principle components in the pool and the total eigenvalues is lower than µ. The result is a matrix *W_{r'xk},* where each column is one of the selected eigenvectors. Finally, in lines 4-6 the original datasets is multiplied by matrix ***W*** to generate the latent context variables and return the result after the a normalization of all numeric variables to the range {0..1}. To extract latent contexts from a new observed sample *t*, it is required to normalize the sample (similar to the procedure from line 1), multiply it by the principal component matrix W and normalize all variables to the range {0..1} before returning the latent context attributes.

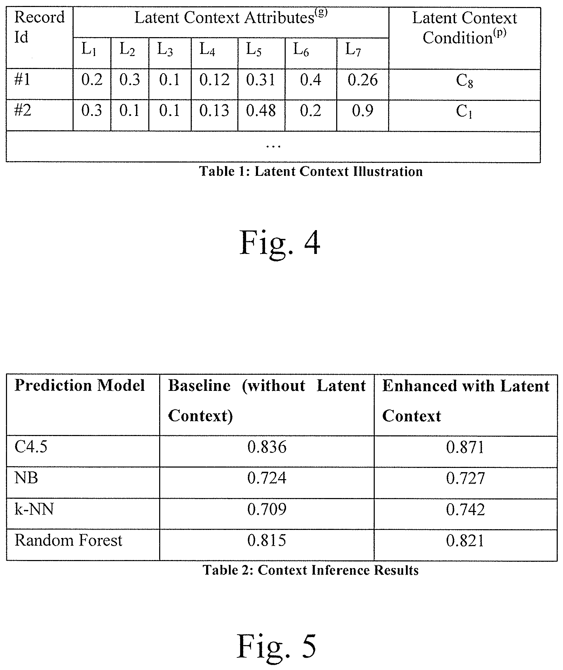

The Pattern Matcher component 113, is responsible to match all discovered patterns from the three algorithms applied above (Clustering algorithm, Deep Learning and PCA) into a unified vector. The matching is based on records' ids, entity's ids and timestamps. Illustration example of matched latent records can be observed in Fig. 4 - Table 1. In this example latent context attributes are merged with a single latent context condition. The latent context attributes have a vector with cardinality of 7 (L₁ .. L₇) and is based on global models created the entire dataset (denoted with ^{(g)} symbol). The latent context condition is based on personal models (denoted with ^{(p)} symbol), when the associated cluster id (e.g.: C₁) tags each record with the relevant latent context. C1... C8 are specific latent context patterns.

### Evaluation and Use Cases

Two use cases are presented, which demonstrate how the discovered latent context patterns can be utilized and combined with external services. The first use case relates to explicit context inference, while the second use case demonstrates how latent context can improve accuracy results of recommendation systems.

### Use Case I - Explicit Context Inference.

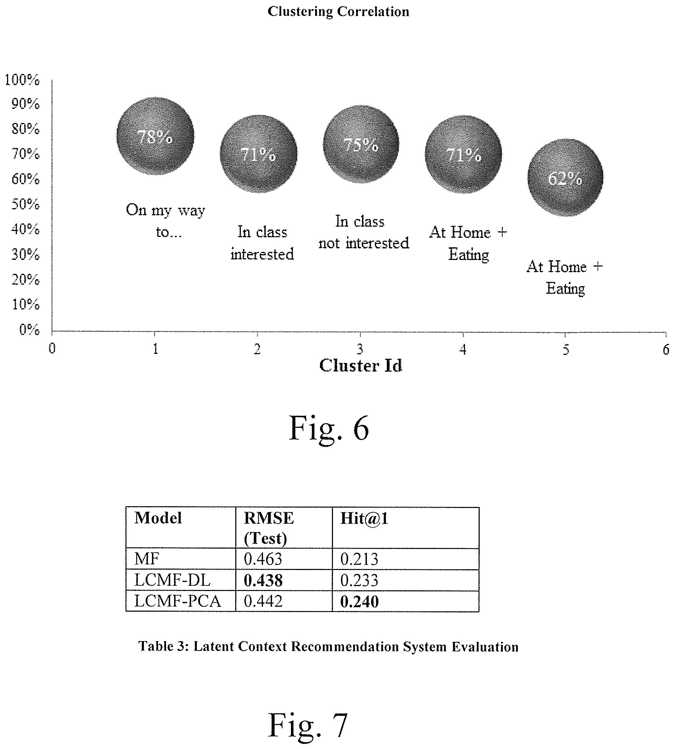

In this use case it is examined how data collected from mobile devices can be utilized to infer users' behavior and environment. In a field experiment a mobile was developed, which record different sensors, and in addition the participants were asked to report their current context. The collected data included the following sensors: Accelerometer, Battery, Browser Searches, Light, Running Applications, Screen State, Location, Wifi Networks, and Microphone. The contexts reported by the participants were varied and unique and included the following: "In class and interested in the lesson "; "In class and not interested in the lesson"; "At home "; "Listening to Music"; "Smoking "; "Eating"; and "On My Way To..". The data was collected from 40 undergraduate students during a two-week experiment .After pre-processing, a total of 5,287 labeled records were extracted from the raw data. In order to infer the explicit context from the raw sensor data several supervised learning techniques were applied, such as decision trees (C4.5 model), Naive Bayes (NB), k-nearest neighbors (k-NN) and ensemble learning (Random Forest). After training these baseline models they were enhanced with the latent context patterns that were discovered by applying the suggest method. In this particular case the deep learning algorithm was applied for this task. Fig. 5 schematically shows table 2, which compares the inference accuracy results with and without the latent context enhancement. The results are measured by the AUC metric (area under cover) and based on 10 fold cross-validation. As it can be observed the latent context enhancement improved consistently all baseline models up to 4% in terms of accuracy.
In another experiment with this data the clustering approach was applied and compared the correlation between the clusters and the actual explicit contexts. Fig. 6 demonstrates the correlation between the latent contexts clusters and the actual explicit ones of a single user. As it can be observed in most cases the correlation in most cases is above 70%.

### Use Case II - Context Aware Recommendation System

As a case study, data obtained from mobile devices' sensors was analyzed, and the effects on the accuracy of recommender systems were examined. The contribution on a system that recommends points of interest (POIs) is demonstrated, e.g.: restaurants, bars, cafés, entertainment centers, etc. Sixty undergraduate students from different faculties participated in the experiment with the application during 4 weeks. Data about 227 POI's was collected in the town where the University is located. Overall the system recorded 7335 events (like, dislike, check-in) and respectively the same number of context data records. To test the solution, the a state of the art recommendation system was compared to the result, using the matrix factorization technique (denoted as MF) to two recommendation models with latent context enhancements: for one model the deep-leaning algorithm was applied (denoted as LCMF-DL) and for the second one the PCA algorithm was applied, (denoted as LCMF-PCA) . The accuracy of the recommendation system was measured using two metrics: root mean square error (RMSE) which measure the difference between actual rating and the predicted one and hit@1 which measures the percentages of ranked 1 recommendations (out of top-10 recommendations). The results are summarized in Fig. 7 which present a table that compares the results. As it can be observed the proposed solution improved RMSE between 5.5% and 6%, while Hit@1 was improved by a factor between 9.13% and 12.6%.

## Claims

1. A method for extracting latent context from raw data sensor, comprising the steps of:
a. extracting , by a feature extractor, features from raw data sensor records by data manipulations, mathematical calculations and extracting statistical features related to sensor data;
b. discovering, by a a latent context discovery unit, latent context patterns by building a latent context condition applying clustering algorithm; and building a latent context attributes applying Deep Learning algorithm and PCA algorithm; and
c. matching, by a pattern matcher, said discovered patternsinto a unified vector which presents the latent context patterns extracted from said raw data sensor.

2. A method according to claim 1, wherein extracting features from raw data sensor records is done by:
a. data aggregation of pervious collected sensor records;
b. normalization;
c. calculating statistic measures of average, mean, variance, standard deviation, minimum, maximum, range, correlation, percentile analysis, energy, entropy;
d. time series analysis for identifying trends;
e. Fourier Transformations on time series;
f. distribution analysis for nominal and numeric values;
g. rule based extracted features on raw data sensors; and
h. applying external services which may enhance the current data.

3. A method according to claim 1, wherein latent context patterns can be global or personal.

4. A method according to claim 1, wherein constructing latent context condition using clustering algorithm comprises the steps of:
a. defining an initial set of k centroids randomly, one for each cluster;
b. associating each point belonging to a given data set to the nearest centroid using a distance measure;
c. re-calculate k new centroids ;
d. repeating steps b and c until reaching a predetermined number of repeats or until there are no more changes in the assignment of points to clusters.

5. A method according to claim 1, wherein constructing latent context attributes using Deep Learning algorithm comprises the steps of:
a. Receiving as an input a training set *S* = {*s*₁, *s*₂, ..., *sₙ*}, where each sample is *r*-dimensional, containing the features extracted from the raw data; *l* - the number of latent context variables to be learned; *f* - the activation function for the neural network;
b. normalizing S dataset by converting nominal values to a set of binary indicators, and normalizing all numeric variables to the range {0..1} the normalization includes resulting in a normalized dataset *S'* where each sample is *r'*-dimensional and each value is a numeric variable within the range {0..1};
c. training an Autoencoder over the normalized training set;
d. setting the neural network to include *l* hidden units and to activate function *f*;
e. retrieve the matrix *W_{lxr'}* where *wᵢⱼ* is the weight of the edge that connects the *j^{th}* input node to the *i^{th}* hidden unit;
f. initializing a dataset *O*;
g. iterating on each sample in *S'* multiplying said sample by the transpose of *W,* and applying the activation function on each element of the resulted vector;
h. adding said resulted vector to *O* and returning *O* as a resulted dataset containing the extracted *l*-dimensional latent context attributes of *S*.

6. A method according to claim 1, wherein constructing latent context attributes using PCA algorithm, comprising the steps of:
a. Receiving as an input:
a.1) a training set *S =* {*s*₁,*s*₂, ..., *sₙ*} where each sample is *r-*dimensional, containing the features extracted from the raw data; *l* - the number of latent context variables to be learned; *f* - the activation function for the neural network; and
a.2) µ that specifies the threshold as the percentage of how much variance of the original data, the principal components must cover;
b. normalizing *S* dataset by converting nominal values to a set of binary indicators, and normalizing all numeric variables to the range {0..1} the normalization includes resulting in a normalized dataset *S'* where each sample is *r'*-dimensional and each value is a numeric variable within the range {0..1};
c. training a PCA model on *S'* using the covariance method;
d. retrieving the top-k PCA components with the highest matching eigenvalues and adding Principle components to the top-k pool until the ratio between the eigenvalues sum of selected principle components in the pool and the total eigenvalues is lower than µ, resulting a matrix *W_{r'xk}*, where each column is one of the selected eigenvectors;
e. multiplying the original datasets *S* by matrix *W* thereby generating the latent context variables and normalizing all numeric variables to the range {0..1};
f. returning as a result *O* dataset which contain the latent context attributes for *S* and a function to extract latent context for new observed data sample *t*.
